# DEMANDE DE BREVET EUROPEEN

(11) **EP 0 743 086 A1**
(43) Date de publication de la demande: **20.11.1996**
(21) Numéro de dépôt: 96400996.3
(22) Date de dépôt: 09.05.1996
(51) Int. Cl.: B01D 53/047, C01B 13/02

(54) **Procédé de production d'oxygène sous pression par adsorption**

(30) Priorité: 18.05.1995 FR 9505924
(71) Demandeur: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Monnot, André, 78310 Elancourt-Maurepas (FR); Renaudin, Marie-Hélène, 75015 Paris (FR)
(74) Mandataire: Le Moenner, Gabriel

(57) **Abrégé**

Le procédé comprend une phase de régénération comportant une étape de dépressurisation à co-courant, pour participer à la repressurisation d'un autre adsorbeur, une dépressurisation à contre-courant jusqu'à la pression basse du cycle sans admission de gaz, puis une étape d'élution à contre-courant à pression basse du cycle avec de l'oxygène prélevé sur la production. La durée du cycle n'excède pas 20 secondes.

Application notamment à la production d'oxygène à une pureté supérieure à 90 % à des débits de 2 à 6 litres/minute pour l'oxygénothérapie.

## Description

La présente invention concerne les procédés de production d'oxygène impur sous pression par adsorption dans une installation comprenant deux adsorbeurs subissant chacun, au cours d'un cycle, les étapes suivantes :
a) recompression, depuis la pression atmosphérique, avec admission à co-courant d'air comprimé et, à contre-courant, de gaz provenant de l'autre adsorbeur en phase c) ;
b) production avec admission d'air comprimé et extraction d'oxygène jusqu'à une pression haute du cycle non inférieure à 1,9 × 10⁵ Pa ;
c) décompression à co-courant par mise en communication avec l'autre adsorbeur en phase a) ; et
d) régénération avec dépressurisation à contre-courant jusqu'à la pression atmosphérique et élution à contre-courant par de l'oxygène de production.

Un procédé de ce type, convenant tout particulièrement à l'oxygénothérapie, est décrit dans le document EP-A-0.176.393. Dans le procédé de ce document, l'élution s'effectue pendant toute la phase de régénération avec de l'oxygène prélevé sur la production pendant toute la phase de production, un débit dérivé d'oxygène étant à cette fin acheminé en permanence vers la capacité-tampon via des orifices calibrés. Comme on le verra plus loin, les procédés selon ce document conviennent pour la fourniture d'oxygène à une pureté supérieure à 90 % à des débits d'oxygène n'excédant pas 3 litres/minute. Or, une demande s'intensifie de pouvoir disposer de débits d'oxygène dépassant 3 litres/minute, voire 5 litres/minute, notamment pour l'intégration dans des systèmes d'anesthésie autonomes pour hôpitaux de campagne.

Une augmentation de la concentration en oxygène et/ou du débit pourrait être obtenue en adoptant un cycle dit mixte avec une pression haute de cycle supérieure à la pression atmosphérique et une pression basse de cycle inférieure à la pression atmosphérique, comme dans la plupart des installations industrielles de grande capacité. Ces solutions se traduisent toutefois par des surcoûts considérables d'investissement et de fonctionnement en raison notamment de la présence d'une pompe additionnelle.

La présente invention a pour objet de proposer des perfectionnements aux procédés du type mentionné ci-dessus en premier, permettant d'améliorer les performances en termes de débits et de pureté d'oxygène, sans augmenter l'encombrement, l'investissement, ni la consommation électrique de l'appareil.

Pour ce faire, selon une caractéristique de l'invention, la première partie de l'étape d) est une pure dépressurisation sans admission de gaz à contre-courant, l'élution n'étant effectuée qu'en fin de cette phase d), typiquement pendant une durée n'excédant pas la moitié de la phase d).

Selon d'autres caractéristiques de l'invention :
- la durée totale d'un cycle n'excède pas 20 secondes ;
- l'élution s'effectue à la pression atmosphérique et sa durée est inférieure à la moitié de la durée de l'étape d).

D'autres caractéristiques et les avantages de la présente invention ressortiront de la description suivante d'un mode de réalisation donné à titre illustratif mais nullement limitatif, faite en relation avec les dessins annexés, sur lesquels :
- la figure 1 est une vue schématique d'une installation pour la mise en oeuvre d'un procédé selon l'invention ; et
- la figure 2 est une vue schématique d'un cycle conforme au procédé selon l'invention.

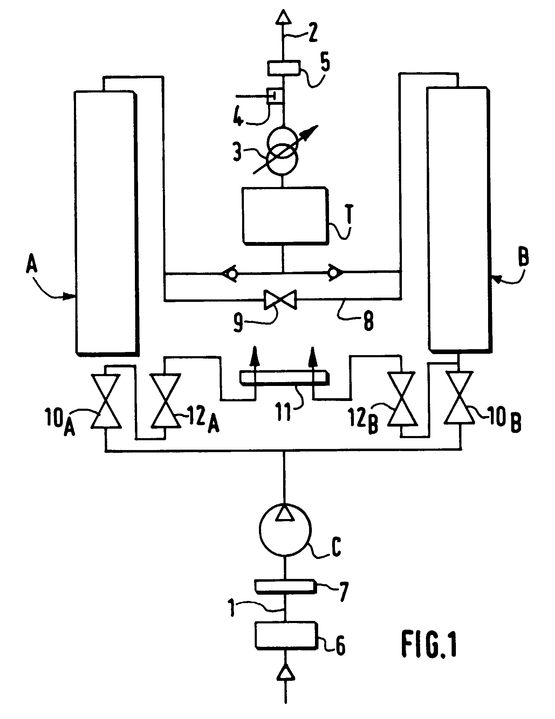

L'installation de production d'oxygène impur, également appelée concentrateur, représentée sur la figure 1 comprend deux adsorbeurs A et B, remplis d'un tamis moléculaire et interposés entre une ligne 1 d'alimentation en air comprimé par un compresseur C et une ligne de production 2 destinée à être reliée à un poste utilisateur et comprenant, en série, une capacité-tampon T, un détendeur 3 et une soupape de surpression 4 garantissant que la pression au poste utilisateur n'excède pas un niveau déterminé d'environ 1,5 × 10⁵Pa. Typiquement, la ligne de production 2 comporte, en sortie, un filtre bactériologique 5, la ligne d'admission 1 comportant, successivement, un filtre silencieux 6 et un filtre bactériologique 7.

Les sorties des adsorbeurs A et B communiquent directement avec la capacité T et sélectivement l'une avec l'autre via une ligne de couplage ou d'équilibrage 8 munie d'une électrovanne bi-directionnelle 9. Les entrées des adsorbeurs A et B communiquent avec la ligne d'admission 1 via des électrovannes d'entrée 10A et 10B, respectivement et avec une mise à l'air libre pourvue d'un silencieux d'échappement 11 via des électrovannes 12A et12B, respectivement.

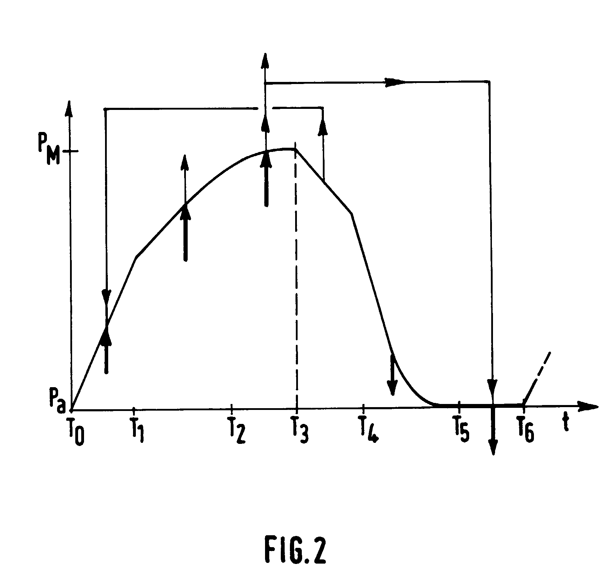

On décrira maintenant, en relation avec la figure 2, un cycle selon l'invention. En partant de la pression basse Pₐ du cycle, qui est la pression atmosphérique, les vannes 10A/B et 9 étant ouvertes, chaque adsorbeur subit une première pressurisation (étape T₀-T₁) par de l'air comprimé admis dans le sens de production (appelé ci-après sens co-courant) et, à contre-courant, par du gaz sous pression enrichi en oxygène provenant de la sortie d'un adsorbeur ayant terminé sa phase de production (étape T₃-T₄, comme on le verra plus loin). Au-delà d'une pression intermédiaire, de l'ordre de 1,5 à 2 × 10⁵ Pa, et jusqu'à la pression haute du cycle, typiquement de 2,8 à 3,3 × 10⁵ Pa, avantageusement d'environ 3,0 × 10⁵ Pa, la vanne 9 est fermée et l'adsorbeur fonctionne en phase de production (étapes T₁-T₃) avec admission d'air comprimé à l'entrée et extraction d'oxygène côté sortie. En fin de phase de production (étape T₂-T₃), une partie de l'oxygène produit est adressée à contre-courant à un adsorbeur ayant terminé sa décompression (étape d'élution T₅-T₆, vannes 9 et 12A/B ouvertes, comme on le verra plus avant).

A la fin de la phase de production, à l'instant T₃, la vanne d'admission (10A/B) est fermée et, la vanne 9 étant ouverte, l'adsorbeur subit une première dépressurisation à co-courant (étape T₃-T₄), le gaz évacué participant, comme vu plus haut, à la repressurisation de l'autre adsorbeur (étapes T₀-T₁). A l'instant T₄, la vanne 9 est fermée et la vanne d'échappement 12A/12B est ouverte, l'adsorbeur se dégonflant ainsi à contre-courant jusqu'à atteindre la pression basse du cycle Pₐ. A ce niveau, comme sus-mentionné, l'adsorbeur subit une élution à contre-courant avec du gaz de production, la vanne d'échappement 12A/12B restant ouverte et la vanne 9 étant également ouverte. A l'instant T_{6,} correspondant à l'instant T₀ décrit précédemment, l'adsorbeur recommence un nouveau cycle identique.

Typiquement, la durée d'un cycle d'un procédé selon l'invention pour application d'oxygénothérapie n'excède pas 20 secondes et est typiquement compris entre 16 et 19 secondes. Au sein d'un tel cycle, les étapes T₁-T₂ ou T₄-T₅ ont une durée supérieure à la moitié d'un demi-cycle, soit typiquement entre 5 et 5,5 secondes. Les étapes T₂- T₃ ou T₅-T₆ ont une durée légèrement supérieure à celle des étapes T₀-T₁ ou T₃-T₄, soit typiquement environ 2 secondes.

On a représenté sur le Tableau 1 ci-dessous une comparaison entre un cycle selon le document sus-mentionné et un cycle selon l'invention, dans les conditions suivantes :
P_{M} : 3 × 10⁵ Pa
durée de cycle :
+ art antérieur : 28 secondes
+ invention : 16,4 secondes
durée des étapes :
+ art antérieur :
   . T₀-T₁ et T₃-T₄ : 2 secondes ;
   . T₁-T₃ et T₄-T₆ : 12 secondes
+ invention :
   . T₀-T₁ et T₃-T₄ : 1,2 seconde ; et
   . T₁-T₂ et T₄-T₅ : 5 secondes ;
   . T₂-T₃ et T₅-T₆ : 2 secondes.

Tous les autres paramètres (température, dimensions, adsorbants) étant par ailleurs identiques.

**Tableau 1:**

| Débits en litres/min. | Art antérieur Teneur O₂, % | Invention Teneur O₂, % |
|---|---|---|
| 2 | 95 | 95 |
| 4 | 91,3 | 95 |
| 5 | 83,8 | 95 |
| 5,5 | 81 | 93,5 |
| 6 | 76,3 | 89 |

Comme on le voit, le procédé selon l'invention permet de garantir un niveau élevé de teneur en oxygène pour une large plage de débits atteignant 5,5 litres/minute, la teneur en oxygène restant sensiblement supérieure à 90 % jusqu'à des débits de l'ordre de 6 litres/minute.

Quoique la présente invention ait été décrite en relation avec des modes de réalisation particuliers, elle est susceptible de modifications et de variantes qui apparaîtront à l'homme de l'art dans le cadre des revendications ci-après.

## Revendications

1. Procédé de production d'oxygène impur sous pression par adsorption dans une installation comprenant deux adsorbeurs (A, B) subissant chacun, au cours d'un cycle, les étapes suivantes :
a) recompression, depuis la pression atmosphérique (Pₐ), avec admission à co-courant d'air comprimé et, à contre-courant, de gaz provenant de l'autre adsorbeur en phase c) ;
b) production avec admission d'air comprimé et extraction d'oxygène jusqu'à une pression haute du cycle (P_{M}) non inférieure à 1,9 × 10⁵ Pa ;
c) décompression à co-courant par mise en communication avec l'autre adsorbeur en phase a) ;
d) régénération avec dépressurisation à contre-courant jusqu'à la pression atmosphérique (Pₐ) et élution à contre-courant par de l'oxygène de production,
caractérisé en ce que la première partie de l'étape d) est une pure dépressurisation (T₄-T₅) sans admission de gaz à contre-courant, l'élution (T₅-T₆) n'étant effectuée qu'en fin de l'étape d).

2. Procédé selon la revendication 1, caractérisé en ce que l'élution (T₅-T₆) s'effectue à la pression atmosphérique (Pₐ) et sa durée est inférieure à la moitié de l'étape d).

3. Procédé selon la revendication 1 ou la revendication 2, caractérisé en ce que la durée d'un cycle (T₀-T₆) n'excède pas 20 secondes.

4. Procédé selon la revendication 3, caractérisé en ce que le débit de production est compris entre 2 et 6 litres/minute environ.

5. Procédé selon la revendication 3 ou la revendication 4, caractérisé en ce que la durée des étapes a) et c) n'excède pas 3 secondes.

6. Procédé selon l'une des revendications précédentes, caractérisé en ce qu'il comporte l'étape de détendre l'oxygène produit à une pression n'excédant pas 1,5 × 10⁵ Pa pour fourniture à un poste utilisateur.

7. Procédé selon l'une des revendications précédentes, caractérisé en ce qu'il comprend l'étape de faire passer l'air d'alimentation dans un filtre bactérien (7).

8. Procédé selon l'une des revendications précédentes, caractérisé en ce qu'il comprend l'étape de faire passer l'oxygène produit dans un filtre bactérien (5).
